# DEMANDE DE BREVET EUROPEEN

(11) **EP 0 629 934 A1**
(43) Date de publication de la demande: **21.12.1994**
(21) Numéro de dépôt: 94401322.6
(22) Date de dépôt: 13.06.1994
(51) Int. Cl.: G05B 19/04

(54) **Procédé d'attribution d'adresse ainsi qu'unité fonctionnelle et installation s'y rapportant**

(30) Priorité: 18.06.1993 FR 9307403
(71) Demandeur: EURO CP s.a.r.l., F-94240 l'Hay les Roses (FR)
(72) Inventeur: Gilbert, Jérôme, F-92300 Levallois-Perret (FR)
(74) Mandataire: Pontet, Bernard

(57) **Abrégé**

Le procédé effectue une détermination automatique d'une adresse convenable pour une unité fonctionnelle (1, 2, 3, 8, 9) reliée à d'autres unités fonctionnelles semblables par un espace de communication bidirectionnelle (4).

L'adresse choisie est celle qui est de rang immédiatement supérieur à celui de l'adresse de rang le plus élevé déjà attribuée. Chaque unité fonctionnelle reliée à l'espace a en mémoire ladite adresse de rang le plus élevé. Lorsqu'une unité a besoin d'adopter une adresse, les autres la renseignent sur l'adresse de rang le plus élevé. Lorsque l'unité a choisi son adresse, les autres actualisent leur mémoire d'adresse de rang le plus élevé déjà attribuée.

Utilisation pour éviter à l'opérateur l'obligation d'effectuer un choix cohérent de multiples adresses, par exemple dans un réseau d'appareils domestiques, et pour éviter que la recherche d'adresse disponible encombre longuement l'espace de communication et/ou aboutisse à l'adoption de l'adresse d'une autre unité qui n'est que provisoirement absente.

## Description

La présente invention concerne un procédé pour attribuer une adresse à des unités fonctionnelles communiquant entre elles par un réseau de communication.

La présente invention concerne encore une unité fonctionnelle et une installation pour la mise en oeuvre de ce procédé.

L'invention s'applique aux installations domestiques et aux installations en locaux professionnels.

Dans de telles installations, on sait organiser les unités fonctionnelles en les reliant entre elles par un réseau de communication de manière à offrir à l'utilisateur des possibilités de pilotage plus perfectionné, plus automatique ou plus commode.

L'invention est mise en oeuvre avec des unités fonctionnelles, par exemple des appareils ou des fonctions d'appareils, qui ont la possibilité de communiquer de manière bidirectionnelle à travers un espace de communication, par exemple à travers le réseau de distribution électrique en faisant appel à la technique des courants porteurs, ou encore à travers un câble, des fibres optiques, par radio etc. Les unités fonctionnelles peuvent être non seulement des appareils, mais aussi des fonctions ou ressources d'appareil, ou encore un organe assurant une fonction de relais vers un appareil éloigné du local.

La structure de réseau la mieux adaptée pour mettre en oeuvre ce procédé est une structure multi-maître multi-esclave avec échange possible des rôles. Le mode d'accès à l'espace de communication sera avantageusement du type à accès multiple avec écoute préalable de cet espace et gestion des collisions.

Ce type d'installations comporte des phases opératoires de configuration partielle ou totale au cours desquelles des adresses sont attribuées aux unités fonctionnelles.

On sait d'après le FR-A-2670590 attribuer à chaque unité fonctionnelle, d'une part une adresse de maison, ou plus généralement de sous-réseau, grâce à laquelle cette unité fonctionnelle ne pourra communiquer qu'avec d'autres unités fonctionnelles ayant la même adresse de sous-réseau, et d'autre part une adresse d'unité permettant à cette unité de ne pas réagir à des messages qui ne sont destinés qu'à une ou plusieurs autres unités fonctionnelles du sous-réseau.

Selon le procédé décrit dans ce document antérieur, pour déterminer les adresses de sous-réseau et les adresses d'unités fonctionnelles, il existe des champs d'adresses possibles dans lesquels les adresses possibles sont ordonnées. Lorsqu'une unité fonctionnelle, dite "unité cherchante", doit déterminer l'une de ses adresses, elle commence par la première adresse possible du champ, en envoyant un message de demande d'état associé à cette adresse. Si ce message ne reçoit aucune réponse après un temps déterminé et un nombre d'essais déterminé, c'est qu'aucune autre unité fonctionnelle n'a déjà adopté cette adresse, et par conséquent l'unité cherchante adopte l'adresse en question. Si au contraire une autre unité répond au message d'état, c'est que cette autre unité a déjà adopté l'adresse en question, qui n'est donc plus disponible. L'unité cherchante passe alors à l'adresse possible suivante, en fonction de l'ordre selon lequel les adresses possibles sont ordonnées dans le champ, et recommence la procédure de demande d'état, et ainsi de suite jusqu'à ce qu'un message de demande d'état reste sans réponse et que l'adresse correspondante soit adoptée.

Ce procédé d'attribution d'adresse a l'avantage d'être automatique. Il est d'ailleurs très satisfaisant pour la détermination des adresses de sous-réseau.

Il s'est par contre avéré perfectible en ce qui concerne la détermination des adresses d'unité fonctionnelle. D'une part, comme les unités fonctionnelles peuvent être nombreuses, le nombre de messages de demande d'état à envoyer pour aboutir à un message sans réponse permettant de sélectionner l'adresse d'unité correspondante peut être grand. Par conséquent, l'espace de communication est longuement encombré chaque fois qu'une unité fonctionnelle recherche une adresse. Or l'encombrement de l'espace de communication nuit à la rapidité de réaction des autres unités fonctionnelles, par exemple lorsqu'elles reçoivent ou envoient des commandes à travers l'espace de communication.

D'autre part, toutes les unités fonctionnelles ne sont pas connectées en permanence à l'espace de communication, notamment lorsque l'espace de communication est constitué par le réseau d'alimentation électrique. Certaines unités fonctionnelles, dites nomades, ne sont raccordées au réseau que lorsqu'elles sont en service. Ainsi, lorsqu'une unité fonctionnelle recherche son adresse d'unité, elle risque d'adopter l'adresse d'une unité fonctionnelle nomade. On peut certes prévoir que chaque unité déjà munie d'une adresse vérifie, par demande d'état, si son adresse d'unité est toujours disponible lorsqu'on la raccorde au réseau. Mais l'unité fonctionnelle nomade, si elle constate alors que son adresse d'unité n'est plus disponible, va engager un nouveau processus de recherche d'adresse d'unité, qui va d'une part encombrer le réseau et d'autre part retarder la disponibilité effective de l'unité fonctionnelle pour le service que l'utilisateur attend d'elle. Et cette méthode n'est plus applicable lorsque l'unité avait fait l'objet de la création d'un ou plusieurs liens logiques avec d'autres unités fonctionnelles.

Le but de l'invention est ainsi de proposer un procédé d'attribution d'adresse qui, tout en étant tout aussi susceptible d'automaticité que le procédé connu, rend la détermination d'adresse plus rapide et lui assure une plus grande pérennité.

Suivant, l'invention le procédé pour attribuer une adresse disponible choisie parmi un champ ordonné d'adresses possibles, à une unité cherchante reliée à d'autres unités fonctionnelles à travers un espace de communication, est caractérisé en ce que chaque unité fonctionnelle cherchante détermine par interaction avec le réseau quelle est l'adresse déjà attribuée ayant dans le champ d'adresses l'ordre maximal, et retient comme adresse susceptible d'être disponible l'adresse d'ordre immédiatement supérieur.

L'unité fonctionnelle cherchante adopte une adresse d'ordre plus grand que toutes les adresses déjà attribuées, ce qui élimine le risque qu'elle adopte une adresse d'ordre intermédiaire qui ne paraît disponible que parce que l'unité fonctionnelle correspondante est, au moment de la recherche d'adresse, déconnectée de l'espace de communication.

Au sens de la présente invention, l'ordre croissant des adresses correspond à l'ordre d'attribution successive des adresses, c'est à dire que l'adresse destinée à être attribuée en deuxième lieu est considérée comme étant d'un rang supérieur à celui de l'adresse destinée à être attribuée en premier lieu.

Pour éviter les collisions entre les messages d'information provenant de différentes unités fonctionnelles ayant détecté la présence d'une unité fonctionnelle recherchant une adresse, il est préférable que les unités fonctionnelles ne répondent que dans un ordre déterminé les unes par rapport aux autres. Cet ordre déterminé tient par exemple compte de l'ordre de l'adresse de chaque unité fonctionnelle dans le champ d'adresses possibles.

En outre, pour que l'unité cherchante puisse déterminer avec certitude l'adresse déjà attribuée ayant l'ordre le plus élevé dans le champ, tout en limitant l'encombrement de l'espace de communication, il est préférable que les unités fonctionnelles qui attendent leur tour pour répondre au message d'interrogation de l'unité cherchante, écoutent le ou les messages d'information émis entre-temps par une ou plusieurs autres unités fonctionnelles, et n'émettent un message d'information que si ce dernier signifie un accroissement de l'ordre de l'adresse qui sera choisie par l'unité cherchante, par rapport à l'ordre qui résulterait du ou des messages d'information précédents.

On pourrait par exemple prévoir que le message d'information envoyé par les autres unités fonctionnelles consiste en leur propre adresse. L'ordre dans lequel les unités fonctionnelles communiquent leur propre adresse pourrait être tel que les unités fonctionnelles ayant l'adresse d'ordre le plus élevé respectent le silence le plus court avant de répondre au message d'interrogation. Ainsi, en principe, c'est l'unité fonctionnelle ayant l'adresse d'ordre le plus élevé qui communiquera son adresse en premier lieu. Les autres se tairont car, ayant capté ce message d'information, elles constateront que leur propre adresse est d'un ordre moins élevé et qu'il est donc totalement inutile qu'elles émettent.

Mais ce procédé, bien que rapide, a encore l'inconvénient que l'adresse déjà attribuée ayant l'ordre le plus élevé peut correspondre à une unité fonctionnelle qui est hors service au moment de la recherche d'adresse. En outre, si le silence à respecter avant le message d'information est d'autant plus court que l'adresse d'unité fonctionnelle correspondante est d'un ordre élevé, ce silence aura tout de même en pratique une durée non négligeable, sauf dans les cas, a priori peu souhaitable, où le champ d'adresses est déjà presque complètement attribué.

C'est pourquoi on préfère, selon l'invention, que l'information "adresse d'ordre maximal attribuée" existe de manière permanante, et non pas seulement de manière temporaire lorsqu'une recherche d'adresse est en cours. Pour cela, chaque unité fonctionnelle ayant choisi son adresse peut envoyer sur le réseau un message indicatif de l'adresse choisie, à la suite de quoi au moins une autre unité reliée au réseau actualise sur la base de ce message une mémoire d'adresse maximale attribuée. Lorsqu'une unité fonctionnelle recherche une adresse à adopter, l'information qu'elle reçoit à cet effet à travers le réseau est un message élaboré par ladite autre unité d'après le contenu de sa mémoire d'adresse maximale attribuée. Cette autre unité peut être une unité spécialement programmée, mais on s'expose alors aux risques liés aux pannes ou à l'indisponibilité de cette unité spéciale.

Il peut encore exister des problèmes de communication entre l'unité spéciale et l'unité chercheuse, notamment si l'espace de communication est un espace de transmission d'ondes infra-rouges, d'ondes radio ou de courants porteurs. C'est pourquoi on préfère selon l'invention que ce soient tout ou partie des unités fonctionnelles d'action et/ou de commande qui tiennent chacune à jour une mémoire d'adresse maximale attribuée.

Avec cette version préférée de l'invention, les unités fonctionnelles reliées à l'espace de communication connaissent en permanence l'adresse déjà attribuée dont l'ordre est le plus grand. Par conséquent, lorsqu'une unité fonctionnelle recherche une adresse, il suffit que l'unité fonctionnelle ayant reçu le message d'interrogation et ayant le plus court temps de silence à respecter, émette comme message le contenu de sa mémoire d'adresse maximale attribuée. Avec cette version de l'invention, il n'y a aucun inconvénient à ce que l'ordre de priorité pour envoyer cette information corresponde à l'ordre croissant des adresses, de sorte que l'unité fonctionnelle ayant l'adresse de rang numéro 1 peut répondre de manière quasi-instantanée. Le seul risque est que la mémoire d'adresse maximale attribuée de cette unité fonctionnelle ne soit pas à jour, parce que cette unité était récemment déconnectée. Dans ce cas, l'une des autres unités fonctionnelles détecte ce défaut de mise à jour et envoie un message d'information rectificatif, ce message pouvant à son tour être rectifié par une troisième unité fonctionnelle ayant connaissance d'une adresse déjà attribuée d'ordre encore plus grand.

On peut même éviter ces rectifications successives en prévoyant qu'une unité fonctionnelle ayant déjà une adresse vérifie et actualise au besoin sa mémoire d'adresse maximale chaque fois qu'après avoir été déconnectée elle est de nouveau raccordée à l'espace de communication.

La vie de l'installation offre de nombreuses occasions de mise à jour de la mémoire d'adresse maximale des différentes unités. La probabilité d'une bonne mise à jour dans toutes les unités de l'installation augmente avec la multiplication des mises à jour. Les principales occasions de mise à jour sont les suivantes :
- le raccordement d'une unité fonctionnelle à l'espace de communication,
- l'ouverture d'une session d'attribution d'adresse à une unité fonctionnelle raccordée à l'espace de communication,
- après chaque attribution effective d'adresse d'unité,
- chaque fois qu'un message circule dans l'espace de communication.

Plus particulièrement :
- lorsque l'on raccorde une unité à l'espace de communication, cette dernière envoie un message spécifique de demande d'information sur l'adresse maximale attribuée. Elle peut aussi, pour éviter les messages inutiles, émettre directement un message de mise à jour de l'adresse maximale attribuée, et ce message ne provoquera une réponse que s'il est erroné. L'unité peut également envoyer un message non spécifique à la mise à jour de l'adresse maximale attribuée mais dons lequel se trouve l'information d'adresse maximale attribuée et qui a le même effet qu'un message spécifique tel que décrit précédemment.
- lors de l'ouverture d'une session d'attribution d'adresse d'unité, l'appareil qui attribue l'adresse d'unité fait précéder cette attribution par une mise à jour de l'adresse maximale attribuée dont il dispose dans sa mémoire. Ceci se fait de manière analogue au cas de mise à jour précédent.
- après chaque attribution effective d'adresse d'unité : Toute session d'attribution d'adresse d'unité ne se déroulant pas normalement (interruption, champ d'adresses saturé, problème de communication) conduit à un avortement de la session en cours puis à sa clôture avec restauration de l'état antérieur à l'ouverture de cette session, en particulier en ce qui concerne le contenu de la mémoire d'adresse maximale attribuée. Pour arriver à ce résultat simplement, il suffit au cours d'une session d'attribution d'adresse d'unité, de ne travailler, sur la valeur de l'adresse maximale attribuée, que dans un moyen de stockage temporaire sans détruire la valeur stockée dans un moyen de stockage non volatile. La mise à jour interne des mémoires non volatiles à partir de la valeur d'adresse maximale attribuée contenue dans le moyen de stockage temporaire n'a lieu qu'au moment de la clôture de la session d'attribution d'adresse si elle s'est déroulée correctement.
- chaque message contenant l'adresse d'unité de l'émetteur peut être utilisé par les autres unités fonctionnelles comme moyen de contrôle de la cohérence du contenu de leur mémoire d'adresse maximale attribuée. On peut même prévoir que chaque message comporte, totalement ou partiellement, l'information "adresse maximale attribuée" telle qu'elle est en vigueur, d'après l'unité émettrice. Dans ces deux cas, il ne s'agit plus de messages spécifiques à la gestion de l'adresse maximale attribuée mais de messages quelconques dont on exploite une partie de l'information transportée pour cette gestion.

Il est en effet possible d'aménager un emplacement dans les messages de l'installation pour transporter la valeur de l'adresse maximale attribuée. Dans ce cas, on se retrouve lors de chaque envoi de message dans les conditions d'une mise à jour potentielle de l'adresse maximale attribuée.

Lorsque l'intégralité de l'information "adresse maximale attribuée" est jugée trop encombrante pour être transportée dans tous les messages transmis dans le réseau, il est possible de n'en transmettre qu'une partie. Pour réduire le volume d'information à transporter on peut par exemple diviser le champ d'adresses en N sous-ensemble et ne transmettre que le numéro du sous-ensemble auquel appartient l'adresse maximale attribuée en vigueur. Le procédé de mise à jour tel que décrit précédemment n'est alors déclenché par une unité réceptrice que si elle constate une différence entre le numéro de sous-ensemble reçu et celui calculé à partir du contenu de sa mémoire d'adresse maximale. Il est préférable que les sous-ensembles contiennent des adresses non pas successives, mais espcées les unes des autres. La probabilité que deux adresses maximales en vigueur dans l'installation appartiennent toutes deux au même sous-ensemble est alors fortement diminuée.

La diminution de la probabilité de détection d'erreur de mise à jour qui accompagne malgré tout la réduction du volume d'information transportée à propos de l'adresse maximale attribuée peut ne pas affecter certaines utilisations de l'adresse maximale attribuée, comme la détermination des conditions d'accès à l'espace de communication, dans la mesure où les autres procédés n'utilisent pas non plus l'intégralité de l'information sur l'adresse maximale attribuée, mais seulement une information réduite de la même manière que celle qui est transportée, par exemple la même découpe en sous-ensembles.

Selon un second aspect de l'invention, l'unité fonctionnelle est caractérisée en ce qu'elle comprend un micro-contrôleur programmé selon le procédé du premier aspect, et auxquels sont reliés des moyens d'entrée/sortie et un moyen de communication bidirectionnelle pour relier le micro-contrôleur à un espace de communication bidirectionnelle.

Suivant un troisième aspect de l'invention, l'installation comprend des unités fonctionnelles selon le deuxième aspect, reliées par un espace de communication bidirectionnelle.

D'autres particularités et avantages de l'invention ressortiront encore de la description ci-après, relative à des exemples non limitatifs.

Aux dessins annexés :
- la figure 1 est une vue schématique d'une installation selon l'invention ;
- la figure 2 est un schéma-bloc d'une unité fonctionnelle selon l'invention ;
- la figure 3 est un organigramme d'attribution d'adresse, selon lequel est programmé le micro-contrôleur d'une unité fonctionnelle ;
- la figure 4 est un organigramme d'un sous-programme de validation ;
- la figure 5 est une vue analogue à la figure 1, mais partielle et relative à une variante ;
- la figure 6 est un organigramme d'un sous-programme de redistribution des adresses d'unité; et
- la figure 7 est un organigramme relatif à une variante du procédé.

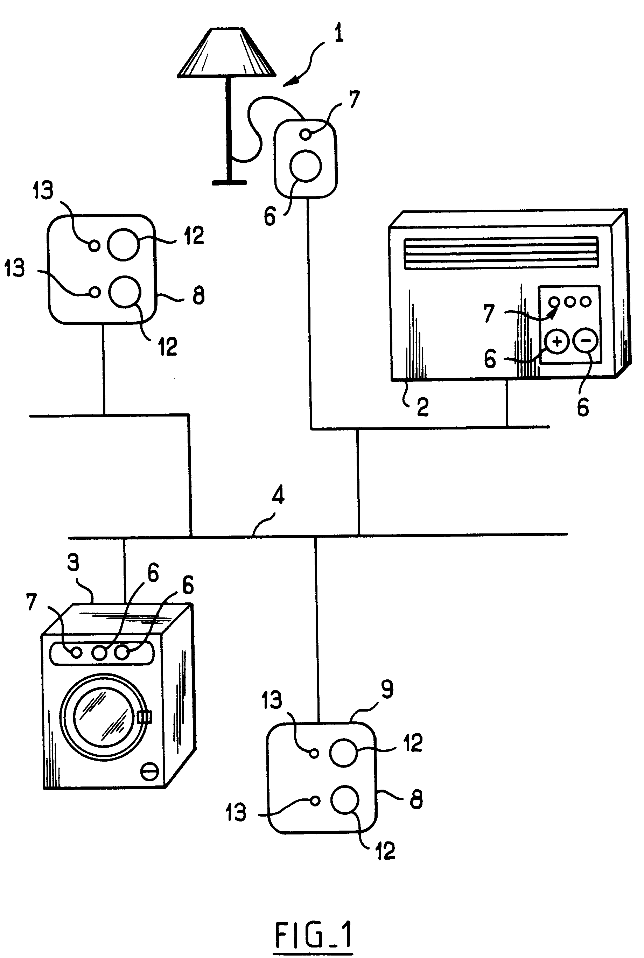

Dans l'exemple représenté à la figure 1, l'installation, volontairement simplifiée, comprend diverses unités d'action, à savoir un lampadaire 1, un convecteur de chauffage 2, et une machine à laver 3, qui sont reliées les unes aux autres par un espace de communication bidirectionnelle 4 à travers lequel elles peuvent échanger des messages d'état provenant des unités d'action 1 à 3 et des messages de commande destinés aux unités d'action 1 à 3. Les unités d'action 1 à 3 comprennent un ou plusieurs boutons de réglage 6 offrant au minimum deux états de fonctionnement, par exemple "marche" et "arrêt", et un ou plusieurs voyants lumineux ou autres indicateurs 7.

Dans l'exemple, l'espace 4 est constitué par le réseau d'alimentation électrique, auquel cas les messages sont élaborés de manière concrète selon la technique des courants porteurs. L'espace 4 pourrait également être constitué par un autre moyen, par exemple un câble dédié, des fibres optiques, un canal radio, etc.

Deux unités de commande 8 sont également reliées à l'espace 4 pour recevoir les messages d'état de la part des unités d'action 1 à 3, et leur adresser des messages de commande et des messages de demande d'état.

Les unités de commande 8 représentées comprennent deux boutons de télécommande 12 à chacun desquels est associé un voyant de signalisation 13.

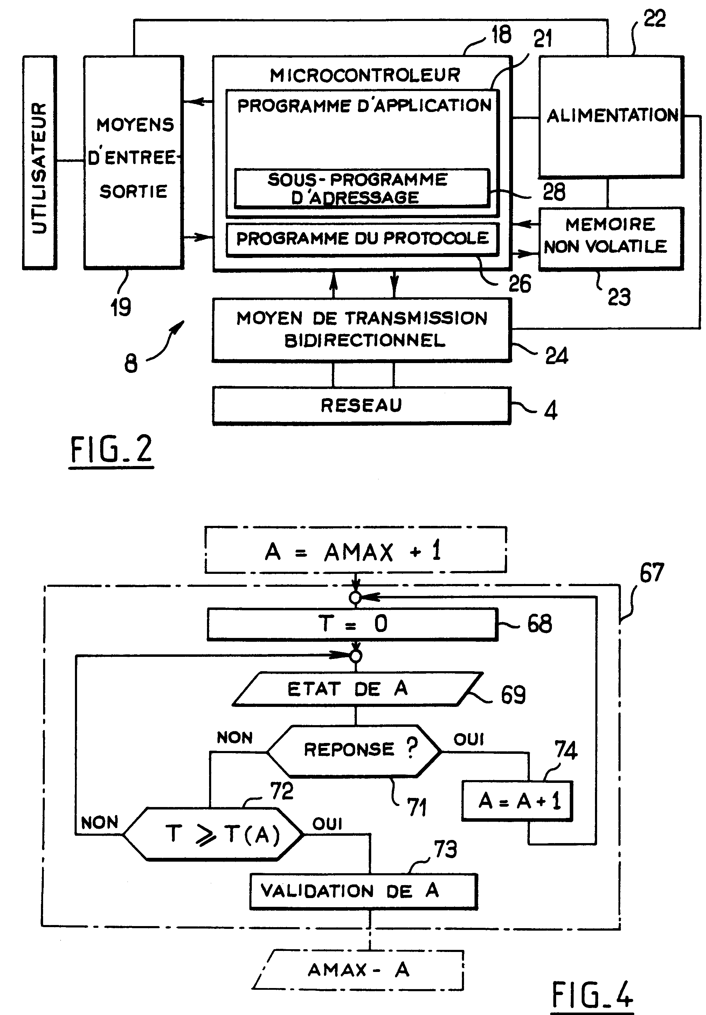

Comme représenté à la figure 2, chaque unité fonctionnelle de commande ou d'action comporte un micro-contrôleur 18 relié à des moyens d'entrée/sortie 19 qui font l'interface avec l'utilisateur. En pratique, ces moyens d'entrée/sortie sont constitués par les boutons 6 et les voyants lumineux 7 des unités d'action, ou 12 et 13 des unités de commande, et aussi par les actionneurs des unités d'action, qui fournissent à l'utilisateur l'action attendue, par exemple éclairage, chauffage etc.

En fonction des commandes effectuées sur les boutons 6 , 12, et le cas échéant des signaux reçus de capteurs, un programme d'application 21 prévu dans le micro-contrôleur gère l'action des voyants lumineux 7, 13 et, lorsqu'il s'agit d'unités d'action, des actionneurs (lampes, moteurs, résistances chauffantes, relais etc) faisant partie des moyens d'entrée/sortie. Le micro-contrôleur 18 est en outre relié à une alimentation 22 et à une mémoire non-volatile 23. Le micro-contrôleur 18 est aussi relié à l'espace 4 par l'intermédiaire d'un moyen de transmission bidirectionnelle 24, par exemple un modem capable de transformer en messages du type courants porteurs les informations reçues du micro-contrôleur 18, et inversement de transformer en signaux acceptables par le micro-contrôleur 18 les messages du type courants porteurs provenant de l'espace 4.

Il est aussi prévu dans le micro-contrôleur 18 un programme de protocole 26 qui gère les échanges d'informations entre le moyen de transmission bidirectionnelle, les moyens d'entrée/sortie et la mémoire non-volatile.

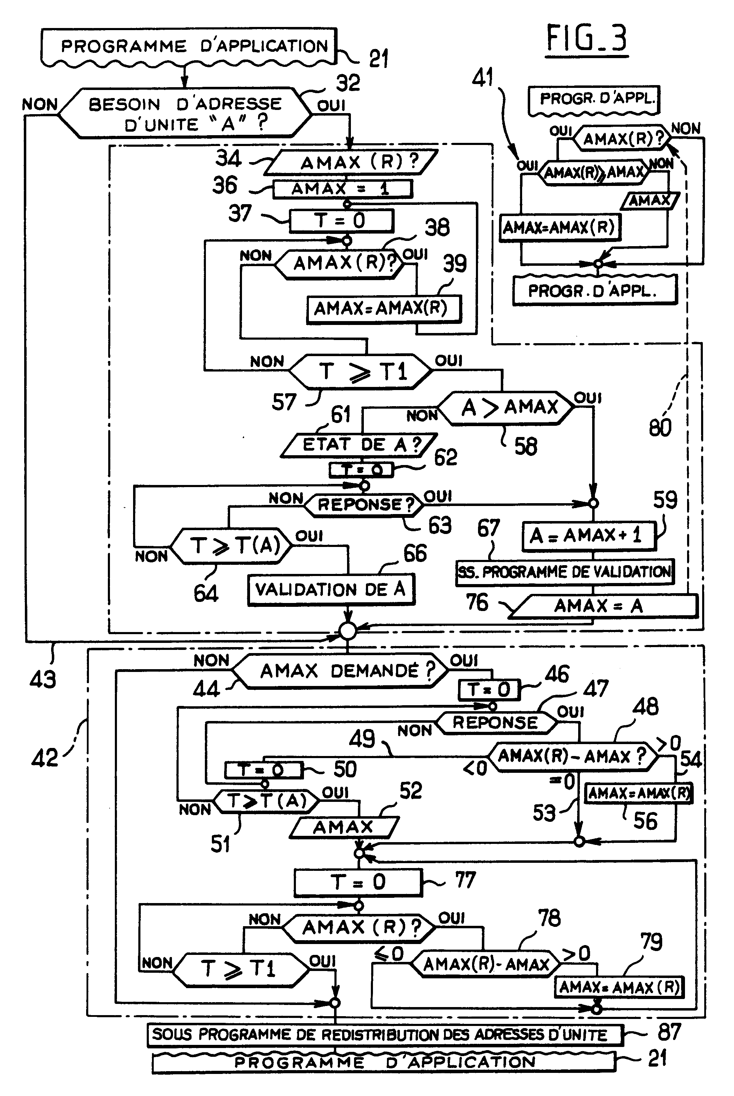

On va maintenant décrire en référence à la figure 3 certains éléments de la programmation du micro-contrôleur 18 d'une unité fonctionnelle

Le programme d'application 21 (Fig. 3), exécuté cycliquement, passe par un test 32 pour déterminer s'il est nécessaire de choisir une nouvelle adresse d'unité, ou de confirmer la validité de l'adresse actuellement enregistrée.

Dans les organigrammes des figures 3, 4, 6 et 7 on a représenté les tests par des hexagones, les messages émis par des parallélogrammes, les opérations de logique interne par des rectangles et les opérations mixtes (envoi de message et opération interne) par des trapèzes rectangles.

Dans l'exemple représenté à la figure 3, on se place dans l'hypothèse où chaque unité fonctionnelle reçoit, à la fabrication, une adresse d'unité arbitraire choisie parmi le champ d'adresses possibles.

Ce champ d'adresses est ordonné, c'est à dire qu'on connaît à l'avance l'ordre dans lequel les adresses possibles seront attribuées.

Dans l'exemple représenté, on considère que les adresses sont des nombres successifs. L'adresse arbitraire qui est enregistrée dans chaque unité fonctionnelle à sa fabrication, peut, par exemple, être l'adresse "1".

Compte tenu de ce qui précède, chaque unité fonctionnelle, même lors de sa première installation, possède une adresse d'unité. Par conséquent, même le problème de la détermination de l'adresse lors de la première installation se ramène à un problème de vérification d'une adresse pré-existente.

On considérera en particulier qu'il y a besoin de vérifier l'adresse d'unité A, chaque fois qu'après avoir débranché l'unité fonctionnelle, on rétablit son raccordement avec l'espace de communication 4. Si la réponse au test 32 est affirmative, l'unité fonctionnelle ayant à vérifier son adresse, -ci-après désignée par "l'unité cherchante"-, émet un message 34 par lequel elle demande à recevoir de la part d'au moins une autre unité fonctionnelle un message AMAX(R) indiquant quelle est, selon cette autre unité fonctionnelle, l'adresse déjà attribuée ayant l'ordre le plus élevé dans le champ d'adresses.

L'unité cherchante possède elle-même en mémoire une valeur AMAX indicative de l'adresse d'ordre le plus élevé déjà attribuée.

L'adresse AMAX (étape 36) est d'abord rendue égale à 1, c'est-à-dire, à l'adresse d'ordre le moins élevé du champ d'adresses. En effet, si le message 34 ne reçoit aucune réponse, il faudra que AMAX reste égal à 1, puisque l'unité considérée, apparamment seule sur le réseau, va adopter l'adresse "1". Après l'étape 36, une temporisation est lancée (étape 37). Un test 38 détecte si le message 34 de demande d'information sur AMAX reçoit une réponse. Si oui, la valeur de AMAX mémorisée est rendue égale à celle reçue (étape 39).

Pour la réponse au message interrogatif 34, toutes les unités fonctionnelles ayant une valeur AMAX en mémoire, se préparent à émettre. Il faut éviter que toutes répondent en même temps, de manière à éviter les collisions. Pour cela, chaque unité fonctionnelle respecte, à partir de l'instant où le silence s'établit sur l'espace de communication 4, une temporisation T(A) qui est une fonction, par exemple de proportionnalité directe, entre l'ordre de son adresse d'unité et la durée de la temporisation. La durée T1 de la temporisation lancée par l'étape 37 correspond à la valeur de T(A) pour l'adresse ayant le rang le plus élevé possible dans le champ d'adresses. Compte tenu de ce qui précède, la première information "AMAX(R)" reçue provient de celle des unités fonctionnelles ayant une information AMAX en mémoire, et dont le rang d'adresse est le moins élevé. La circulation de cette information à travers l'espace de communication va réinitialiser les temporisations des autres unités fonctionnelles et c'est pourquoi on retourne à l'étape 37 pour réinitialiser également la temporisation de l'unité cherchante.

L'unité cherchante considérée possède elle-même un sous-programme 42 (bas de la figure 3), lui permettant de répondre à un message tel que 34, envoyé par une autre unité fonctionnelle. Ce sous-programme 42 est exécuté soit à la fin du sous-programme 43 d'attribution d'adresse d'unité, soit directement par la sortie négative du test 32 sur le besoin de déterminer ou confirmer l'adresse d'unité. On va maintenant décrire le sous-programme 42 pour mieux comprendre la suite du sous-programme d'attribution d'adresses 43.

Lorsqu'un test 44 détermine qu'une autre unité fonctionnelle demande une information sur AMAX, une temporisation de durée T(A) est lancée (étape 46). Pendant cette temporisation, un test 47 écoute l'espace pour déterminer si une troisième unité fonctionnelle ayant une moins longue temporisation à respecter, répond. Dans la négative, la temporisation n'est jamais réactualisée jusqu'à ce que le test 51 détecte son expiration conduisant à l'émission d'un message 52 formé par le contenu de la mémoire AMAX locale. Si au contraire le test 47 détecte une réponse, un test 48 vérifie si cette réponse AMAX(R) concorde avec la valeur AMAX, qui est localement en mémoire. Si la valeur AMAX(R) reçue est inférieure à celle en mémoire (sortie 49 du test 48), c'est que la troisième unité fonctionnelle ayant émis le message AMAX(R) a une mémoire AMAX qui n'est pas correctement actualisée, et l'unité fonctionnelle considérée doit donc rectifier cette information. Tout se passe donc comme si aucune réponse n'avait été reçue, excepté que, comme le message AMAX(R) a circulé à travers l'espace de communication, l'unité fonctionnelle réinitialise sa temporisation par l'étape 50. Lorsque le test 51 détecte l'expiration de la temporisation T(A), l'unité émet le message 52 formé par le contenu de sa mémoire AMAX.

S'il y a concordance entre une adresse AMAX(R) reçue et celle en mémoire (sortie 53 du test 48), l'unité fonctionnelle n'a plus besoin d'intervenir sur l'espace de communication.

Le test 48 a encore une sortie 54, correspondant au cas où la réponse reçue AMAX(R) révèle que l'information AMAX en mémoire n'est pas correctement actualisée. Dans ce cas, une étape 56 effectue l'actualisation. Que le message 52 ait été émis ou non, il est encore possible que les unités ayant de plus longues temporisations T(A) à respecter fournissent une actualisation intéressante pour AMAX. C'est pourquoi on se rend à une étape 77 de réinitialisation d'une temporisation T1, pendant laquelle un test 78 écoute l'espace pour détecter les réponses AMAX(R) provenant d'unités fonctionnelles ayant respecté une temporisation plus longue que celle de l'unité fonctionnelle considérée, et une étape 79 actualise AMAX si une réponse AMAX(R) plus grande que AMAX est reçue. La durée T1 est égale au retard à respecter par l'unité ayant l'adresse dont l'ordre est le plus grand du champ.

Revenant au sous-programme d'attribution d'adresse d'unité 43, lorsque le test 38 détecte la réception d'un message AMAX(R),on revient à l'étape 37 pour réinitialiser la temporisation: en effet, comme on l'a vu, les autres unités fonctionnelles qui fonctionnent alors selon leur sous-programme 42, ont elles-mêmes réinitialisé la leur et le temps pendant lequel des réponses au message 34 peuvent parvenir à l'unité cherchante est allongé d'autant.

Lorsque le test 38 détecte une absence de message AMAX(R), et qu'un test 57 détermine que la temporisation a atteint la durée terminale T1, on est certain que toutes les réponses AMAX (R) sont parvenues à l'unité cherchante. On passe alors à un test 58 pour déterminer si l'adresse A actuellement attribuée à l'unité cherchante est ou non supérieure à l'adresse AMAX décidée soit par l'étape 39 soit, en l'absence totale de réponse au message 34, par l'étape 36. L'absence totale de réponse au message 34 correspond à l'installation d'une première unité fonctionnelle dans un réseau en train d'être constitué.

Si l'adresse A est inférieure ou égale à AMAX actualisée, alors on vérifie si l'adresse A est disponible en émettant (étape 61) une demande d'état à l'adresse A. Une temporisation T(A), dont la durée est fonction du rang de l'adresse A, est lancée (étape 62).

Si un test 63 détecte une réponse à la demande d'état, c'est qu'une autre unité fonctionnelle a aussi adopté l'adresse A et par conséquent, on se rend à une étape 59 pour que l'unité cherchante adopte l'adresse A = AMAX + 1, qui est la première adresse disponible après l'adresse d'ordre le plus élevé déjà attribuée. Si la temporisation T(A) expire (test 64) sans que le message 61 ait donné lieu à une réponse, c'est que l'adresse A est disponible, et elle est donc confirmée (étape 66).

Si au contraire le test 58 détecte que l'adresse A préexistante de l'unité cherchante est supérieure à l'adresse AMAX actualisée, alors l'adresse A est peut-être égale à AMAX + 1, et on la confirme dans cette valeur (étape 59). Il est également possible que l'adresse A soit supérieure à AMAX + 1, et dans ce cas l'étape 59 la ramène à AMAX + 1.

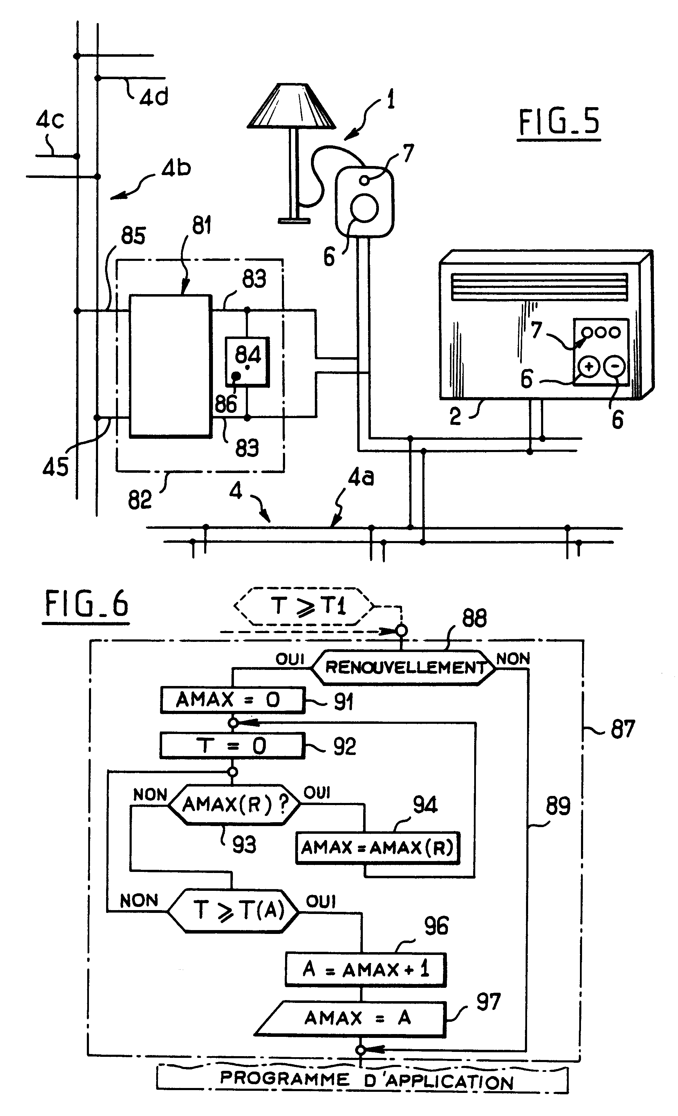

L'étape 59 conduit à un sous-programme 67 de validation de la nouvelle adresse A, pour vérifier que celle-ci est bien disponible. Ce sous programme est représenté à la figure 4. Il comprend une étape 68 de lancement d'une temporisation de durée T(A), et une étape 69 d'émission d'un message de demande d'état à l'adresse A.

Un test 71 détecte l'éventuelle réponse à ce message. Si aucune réponse n'est reçue lorsqu'un test 72 détecte l'expiration de la temporisation, la disponibilité de l'adresse A se trouvera confirmée (étape 73).

Si au contraire le message 69 donne lieu à une réponse de la part d'une autre unité fonctionnelle, on incrémente d'un ordre l'adresse A (étape 74) puis on réitère les étapes 68, 69, 71, et ainsi de suite jusqu'à ce qu'une adresse A s'avère disponible et soit confirmée par l'étape 73.

Revenant à la figure 3, une étape 76 actualise ensuite AMAX en le rendant égal à l'adresse A validée, aussi bien de manière locale que par un message 80 destiné à toutes les autres unités fonctionnelles. Les unités fonctionnelles recevant ce message exécutent un sous-programme 41, visible en haut à droite de la figure 3, suivant lequel on compare l'adresse maximale reçue AMAX(R) et l'adresse maximale AMAX connue de l'unité réceptrice. Si l'adresse reçue est inférieure à l'adresse locale alors l'unité réceptrice envoie à son tour dans le réseau un message de mise à jour contenant l'adresse maximale locale.

Si l'adresse reçue est supérieure à l'adresse locale alors l'unité réceptrice stocke cette valeur dans sa mémoire non volatile comme nouvelle adresse maximale attribuée dans le réseau.

Dans le cas de l'égalité des deux adresses aucune action n'est nécessaire, mais pour simplifier on peut comme représenté traiter ce cas comme celui où l'adresse reçue est supérieure à l'adresse maximale locale, c'est à dire stocker l'adresse reçue à la place de l'adresse maximale précédente.

Dans de nombreux cas, l'espace de communication est un réseau filaire, et on peut souhaiter isoler physiquement un sous-réseau par rapport à un ou plusieurs autres sous-réseaux appartenant au même réseau. On réduit ainsi le nombre d'adresses d'unité nécessaires, et on évite que les opérations de gestion et configuration du sous-réseau perturbent des sous-réseaux voisins, appartenant à des usagers différents.

Pour cela, comme le montre la figure 5, on place entre la partie privative 4a de l'espace 4 et la partie publique 4b du même espace, un filtre 81 qui, tout en permettant le passage du courant de puissance entre ses entrées 83 reliées à la partie privative 4a et ses entrées 85 reliées à la partie publique 4b, assure une isolation entre les entrées 83 et 85 à l'égard des signaux de communication entre unités.

Ainsi, le filtre 81 empêche les communications provenant de la partie privative 4a de passer dans la partie publique 4b et de là dans d'autres parties privatives 4c et 4d, et empêche également les communications qui pourraient circuler dans la partie publique 4b de venir perturber la partie privative 4a.

Le filtre 81 appartient à un dispositif de filtrage et déclaration d'isolement 82 qui comprend en outre, entre les entrées 83 du filtre qui sont raccordées à la partie 4a de l'espace 4, un dispositif de déclaration d'isolement 84 qui a pour fonction d'informer la partie 4a, formant sous-réseau, qu'elle est isolée du reste de l'espace 4, et fournit automatiquement aux unités fonctionnelles du sous-réseau isolé une adresse de sous-réseau, qui peut par exemple être systématiquement l'adresse "01", c'est à dire la première adresse possible dans un champ d'adresses allant de "01" à "239". En effet, l'adresse de sous-réseau peut sans inconvénient être la même pour tous les sous-réseaux isolés.

Un tel dispositif de filtrage et déclaration d'isolement est décrit dans la demande de brevet français n° 93 01 839 du 18 février 1993 non publiée, du même inventeur.

Il est prévu selon la présente invention une commande manuelle 86 pour lancer une redistribution complète des adresses d'unité. Lorsqu'un sous-réseau est équipé d'un dispositif de filtrage et déclaration d'isolement, celui-ci, et notamment son déclarateur d'isolement 84, pourrait comme représenté être équipé de la commande manuelle 86 de redistribution des adresses. Une autre possibilité, alternative ou cumulative peut consister en ce que la redistribution soit automatiquement décidée lorsque l'adresse déjà attribuée ayant l'ordre le plus élevé, AMAX, atteint presque le plus grand ordre disponible dans le champ des adresses possibles.

Chaque unité fonctionnelle est équipée d'un sous-programme 87 (Fig. 3) pour la redistribution des adresses d'unité.

Le sous-programme 87 (Fig. 6) comprend un test 88 pour détecter l'arrivée, à travers l'espace de communication, de l'ordre de redistribution. Dans la négative, le sous-programme est contourné par une ligne 89. Dans le cas contraire, AMAX est rendu égal à zéro (étape 91), une temporisation est lancée (étape 92), et on attend (test 93) la réception, à travers l'espace de communication, d'une information AMAX(R). Si on en reçoit une, une étape 94 rend AMAX local égal à AMAX(R), puis on retourne à l'étape 92 pour réinitialiser la temporisation.

Lorsque la temporisation T(A) expire sans qu'une réponse AMAX(R) ait été reçue depuis la plus récente réinitialisation, l'unité concernée choisit comme adresse A la valeur AMAX + 1 (étape 96) puis actualise, aussi bien de manière locale que par un message lancé aux autres unités, la valeur nouvelle d'AMAX, c'est à dire A (étape 97).

Ainsi, l'unité fonctionnelle encore reliée au réseau et qui avait antérieurement l'adresse du rang le moins élevé (par exemple A = 3) va directement arriver à expiration de la temporisation T(A) sans recevoir de message AMAX(R). Elle va donc adopter l'adresse A =0 + 1 (étape 96), donc A = 1, et émettre AMAX = 1 à l'étape 97. Ceci sera reçu par l'unité qui avait antérieurement l'adresse du deuxième rang le moins élevé, par exemple A = 7.

Celle-ci adopte donc AMAX = 1 à l'étape 94, et A = 1 + 1 = 2 à l'étape 96 et ainsi de suite. Le sous-programme 87 va donc bien concentrer toutes les adresses d'unité vers les rangs inférieurs du champ d'adresses.

En outre, il peut être avantageux pour accélérer le temps nécessaire pour recevoir une réponse à une demande d'AMAX que le déclarateur d'isolement 84 réponde plus rapidement que tous les autres et que son temps de réponse soit indépendant du nombre d'unités reliées à l'espace de communication ainsi que du moment où le déclarateur d'isolement a été relié à cet espace.

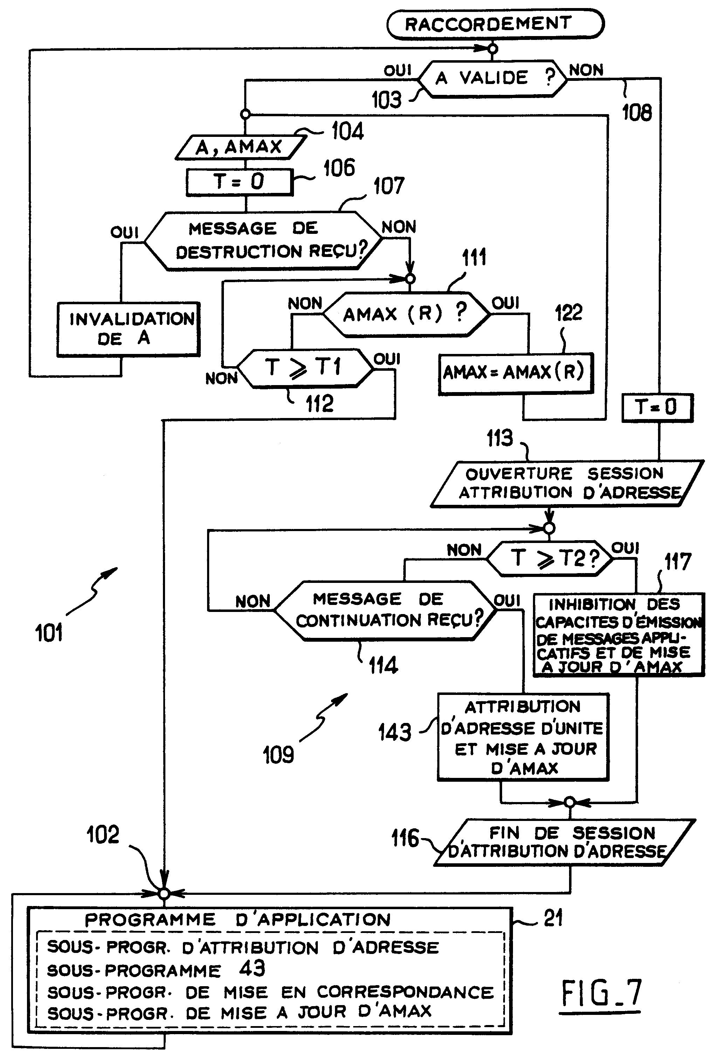

Dans l'exemple représenté à la figure 7, il est prévu un programme d'initialisation 101 qui n'est exécuté qu'une seule fois, chaque fois que l'unité fonctionnelle vient d'être raccordée à l'espace de communication. Dans cet exemple les unités fonctionnelles sont prévues pour avoir une adresse de sous-réseau et une adresse d'unité.

La sortie 102 de ce programme d'initialisation constitue l'entrée du programme d'application 21 qui sera exécuté cycliquement.

Le programme 101 commence par un test 103 pour déterminer si l'unité a une adresse d'unité A qui est valide. Dans le cas où l'unité avait déjà été raccordée à l'espace de communication, le premier passage par le test 103 donne systématiquement lieu à une réponse positive, aboutissant à l'émission d'un message 104 par lequel l'unité communique son adresse d'unité A et ce qu'elle considère comme étant l'adresse maximale attribuée AMAX. Une temporisation est lancée (étape 106) pour marquer le début de la période pendant laquelle des réponses au message 104 peuvent arriver.

Si une autre unité fonctionnelle déjà raccordée à l'espace de communication possède la même adresse A que celle du message 104, cette autre unité fonctionnelle va émettre, grâce à son programme d'application 21, un message de destruction d'adresse et ceci est détecté par un test 107 du programme d'initialisation 101 de l'unité venant d'être connectée. De manière non représentée, ce test 107 peut être effectué cycliquement pendant un certains temps. Si la réponse à ce test est positive, l'adresse A de l'unité considérée est invalidée et on est renvoyé au test de validité d'adresse 103, dont on sortira cette fois par le côté négatif 108 aboutissant à un sous-programme d'attribution d'adresse d'unité 109 qui sera décrit plus loin.

Si le test 107 ne détecte aucun message de destruction, l'adresse A est confirmée comme valide et un test 111 guette la réception d'un message indicatif d'une nouvelle valeur de l'adresse maximale attribuée. En effet, chaque unité fonctionnelle, et donc en particulier celles ayant reçu le message 104, comportent dans leur programme d'application 21 un sous-programme de mise à jour d'AMAX (bas de la figure 7) qui est semblable au sous-programme 42 de la figure 3 et va en particulier émettre la valeur AMAX que l'unité a en mémoire si cette valeur AMAX est supérieure à celle du message 104, et actualiser sa propre mémoire AMAX si le message 104 ou une réponse d'une autre unité à ce message font connaître une valeur AMAX supérieure à celle en mémoire.

Si le test 111 reçoit une réponse, la nouvelle valeur AMAX est adoptée (opération 112) puis la temporisation est réinitialisée dans l'attente d'une valeur AMAX(R) d'un ordre encore plus grand, en provenance d'une troisième unité.

Lorsque la temporisation arrive à son terme (test 112) on passe à l'entrée 102 du programme d'application 21.

A la fabrication, les unités sont systématiquement munies d'une adresse qui sera détectée comme non valide par le test 103. Ainsi, une unité raccordée pour la première fois engage directement le processus de sous-programme d'attribution d'adresse 109.

Le sous-programme d'attribution d'adresse 109 comprend l'émission d'un message d'ouverture 113 puis l'attente, pendant une durée T2, d'un message de continuation (test 114) . Ce message est émis par exemple par le déclarateur d'isolement 84 de la figure 5 fournissant, sur réception du message 113, l'adresse du sous-réseau auquel va appartenir l'unité venant d'être raccordée à l'espace de communication. Si le message de continuation est reçu, un groupe d'étapes 143 semblable au sous-programme 43 de la figure 3, est mis en oeuvre pour attribuer une adresse d'unité A et mettre à jour la valeur de AMAX.

Si aucun message de continuation n'est détecté par le test 114, une opération 117 inhibe les capacités de l'unité à émettre des messages applicatifs et des messages de mise à jour d'AMAX. Autrement dit, l'unité ne va pouvoir mettre en oeuvre le programme d'application 21 que d'une manière essentiellement locale. L'étape 117 est suivie comme le groupe d'étapes 143 par l'émission d'un message 116 de fin de session d'attribution d'adresse avant passage à l'entrée 102 du programme d'application 21.

Celui-ci inclut un sous-programme d'attribution d'adresse permettant d'attribuer à une unité une adresse de sous-réseau et une adresse d'unité.

L'adresse de sous-réseau peut être attribuée par chaînage, auquel cas l'opérateur humain, lorsqu'il y est invité par les moyens d'entrée/sortie de l'unité, informe directement ou indirectement l'unité qu'elle doit adopter l'adresse de sous-réseau de telle ou telle autre unité que l'opérateur désigne.

L'adresse de sous-réseau peut aussi être attribuée par création d'une nouvelle adresse de sous-réseau correspondant donc à un nouveau sous-réseau. La nouvelle adresse de sous-réseau peut être recherchée par un procédé tout à fait analogue à celui de la recherche d'adresse d'unité décrit plus haut, notamment en référence à la figure 3.

L'adresse de sous-réseau peut encore être déterminée par un procédé de sondage systématique des adresses possibles dans l'ordre du champ des adresses de sous-réseau, jusqu'à adoption de la première adresse de sous-réseau pour laquelle un message de sondage (par exemple de demande d'état) reste sans réponse. Ce procédé d'attribution d'adresse nouvelle par sondage successif est décrit dans le FR-A-2670590.

Ainsi, une unité ayant été inhibée par l'étape 117 du sous-programme 109 peut être réhabilitée par attribution volontaire d'une adresse de sous-réseau. Elle peut alors valablement s'attribuer une adresse d'unité A et intevenir dans les mises à jour d'AMAX, grâce au sous-programme 43 de la figure 3.

Le programme d'application 21 (figure 7) inclut encore un sous-programme de mise en correspondance permettant à l'opérateur humain d'établir des liens logiques entre par exemple une unité fonctionnelle de commande telle que 8 ou 9 (figure 1) et une unité fonctionnelle d'action telle que 1, 2 ou 3 pour que les ordres émis par l'unité fonctionnelle de commande soient automatiquement assortis de l'adresse de l'unité d'action avec laquelle cette unité de commande a été mise en correspondance. Un tel procédé de mise en correspondance est décrit dans le FR-A-2670590.

Comme deux unités mises en correspondance doivent en général appartenir au même sous-réseau, le procédé de mise en correspondance peut comporter des étapes de vérification de concordance des adresses de sous-réseau des deux unités mises en correspondance et de chaînage de l'une des unités par rapport à l'autre en cas de non-concordance.

Le mode de mise en oeuvre de la figure 7 a l'avantage d'initialiser très rapidement et pratiquement sans encombrement de l'espace les unités fonctionnelles ayant déjà une adresse valide et le cas échéant une valeur d'AMAX ne nécessiant aucune réactualisation.

On peut prévoir que tout ou partie des messages émis à travers l'espace de communication comportent l'adresse de l'unité émettrice. Lorsqu'une unité perçoit un message émis par une autre unité ayant même adresse d'unité, elle détecte cette anomalie et émet un message de destruction d'adresse ayant comme adresse de destinataire sa propre adresse. L'autre unité est alors privée d'adresse et engage le programme d'adressage 109.

Bien entendu, l'invention n'est pas limitée aux exemples décrits et représentés.

On pourrait aussi prévoir que tout le champ d'adresses d'unité est disponible pour chaque sous-réseau, c'est à dire que deux adresses d'unité identiques soient acceptées si les unités concernées appartiennent à deux sous-réseaux différents. Il est par ailleurs possible que l'information AMAX soit cycliquement émise à travers l'espace de communication, par exemple par l'unité dont l'adresse est AMAX. Dans ce cas, on pourrait prévoir qu'une unité ayant besoin d'une nouvelle adresse attende de recevoir l'information AMAX pour adopter A = AMAX + 1.

Le processus de redistribution en vue de concentrer les adresses attribuées vers les ordres inférieurs du champ intervient en général alors que l'utilisateur a effectué, sur la base des anciennes adresses, des opérations de mise en correspondance entre les unités. On peut par exemple avoir mis en correspondance une unité de commande 9 avec une unité d'action telle que 1 pour que l'actionnement d'un bouton de télécommande 12 déterminé provoque l'émission d'un message de commande muni de l'adresse de l'unité d'action 1 pour que celle-ci soit seule à prendre en compte le message. Il est prévu selon la présente invention d'éviter que le processus de redistribution ne nécessite de refaire tout le travail de mise en correspondance. Pour cela, chaque unité adoptant une nouvelle adresse émet à travers l'espace de communication un message indiquant sa nouvelle et son ancienne adresse. Les unités recevant ce message substituent la nouvelle adresse à l'ancienne dans les données de mise en correspondance contenues dans leur mémoire non-volatile 23.

## Revendications

1. Procédé pour attribuer une adresse (A) disponible, choisie parmi un champ ordonné d'adresses possibles, à une unité cherchante reliée à d'autres unités fonctionnelles (1, 2, 3, 8, 9) à travers un espace de communication (4), caractérisé en ce que l'unité cherchante détermine par interaction avec l'espace de communication (4) l'adresse déjà attribuée ayant dans le champ d'adresses l'ordre le plus élevé, et retient comme adresse susceptible d'être disponible l'adresse d'ordre immédiatement supérieur.

2. Procédé selon la revendication 1, caractérisé en ce que l'unité cherchante, lorsqu'elle a une adresse préexistante d'un ordre inférieur audit ordre le plus élevé, effectue les étapes suivantes :
- envoi d'un message de demande d'état à sa propre adresse préexistante (étape 61) ;
- en l'absence de réponse au message d'état, validation (66) de sa propre adresse pour le futur ;
- en cas de réponse, adoption au moins provisoire de ladite adresse d'ordre immédiatement supérieur.

3. Procédé selon la revendication 1 ou 2, caractérisé en ce que l'unité cherchante, notamment si elle est raccordée pour la première fois à l'espace de communication, lance automatiquement un message d'interrogation (34), en vue de provoquer l'émission de ladite information (AMAX [R]) à travers le réseau (4).

4. Procédé selon l'une des revendications 1 ou 2, caractérisé en ce que certaines au moins desdites autres unités fonctionnelles tiennent à jour une mémoire d'adresse maximale (AMAX) indicative de l'adresse d'ordre le plus élevé déjà attribuée, et en ce que ladite information est émise à travers l'espace de communication par l'une desdites autres unités fonctionnelles d'après le contenu de sa mémoire d'adresse maximale.

5. Procédé selon la revendication 4, caractérisé en ce que lesdites autres unités fonctionnelles qui reçoivent ladite information à travers l'espace de communication comparent une adresse d'ordre le plus élevé reçue (AMAX(R)) découlant de ladite information avec l'adresse d'ordre le plus élevé locale (AMAX) découlant de leur mémoire d'adresse maximale, et mettent leur mémoire d'adresse maximale en accord avec l'adresse d'ordre le plus élevé reçue si cette dernière est d'un plus grand ordre.

6. Procédé selon l'une des revendications 4 ou 5, caractérisé en ce que l'unité cherchante émet un message initiateur (34) susceptible de provoquer l'émission d'une information (AMAX(R)) à travers l'espace de communication (4), et en ce que les unités fonctionnelles recevant le message initiateur (34) ne répondent que dans un ordre déterminé les unes par rapport aux autres.

7. Procédé selon la revendication 6, caractérisé en ce que l'ordre déterminé respecté par lesdites autres unités fonctionnelles tient compte de l'ordre de leur propre adresse dans le champ d'adresses.

8. Procédé selon la revendication 6 ou 7, caractérisé en ce que certaines au moins des unités fonctionnelles susceptibles de répondre au message initiateur (34) émis par l'unité cherchante, n'émettent un message d'information que si ce dernier est de nature à accroître l'ordre de l'adresse qui sera choisie par l'unité cherchante.

9. Procédé selon l'une des revendications 4 à 8, caractérisé en ce que le message initiateur (104) est un message de mise à jour de l'adresse maximale attribuée, auquel les autres unités fonctionnelles ne répondent que si leur mémoire d'adresse maximale attribuée est indicative d'un ordre d'adresse plus grand que celui découlant du message initiateur.

10. Procédé selon l'une des revendications 4 à 9, caractérisé en ce que le message initiateur (104) est lancé dans une phase d'initialisation comprenant également une vérification de la validité d'une adresse préexistante de l'unité cherchante.

11. Procédé selon la revendication 10, caractérisé en ce que si l'adresse préexistante s'avère non valide, une tentative d'attribution automatique (109) d'une adresse disponible est lancée.

12. Procédé selon la revendication 11, caractérisé en ce qu'un échec de ladite attribution automatique conduit à une installation essentiellement locale de l'unité, avec possibilité pour un opérateur de piloter de façon au moins partiellement manuelle une attribution d'adresse.

13. Procédé selon l'une des revendications 4 à 12, caractérisé en ce que lorsqu'elle a choisi ladite adresse d'ordre immédiatement supérieur, l'unité cherchante envoie à travers l'espace de communication (4) un message (76) indicatif de l'adresse choisie, à la suite de quoi certaines au moins des unités fonctionnelles reliées à l'espace de communication (4) actualisent sur la base de ce message leur mémoire d'adresse maximale attribuée.

14. Procédé selon la revendication 13, caractérisé en ce que lesdites unités fonctionnelles comparent (41) le message indicatif de l'adresse choisie avec le contenu de leur mémoire d'adresse maximale attribuée et, si ledit contenu est indicatif d'une adresse d'ordre plus grand que l'adrese choisie, envoient un message de rectification de l'adresse maximale attribuée.

15. Procédé selon l'une des revendications 4 à 14, caractérisé en ce que lorsqu'elle a adopté ladite adresse d'ordre immédiatement supérieur, l'unité cherchante actualise (76) sa mémoire d'adresse maximale d'après cette adresse.

16. Procédé selon l'une des revendications 4 à 15, caractérisé en ce que lorsqu'on raccorde à l'espace de communication une unité fonctionnelle ayant déjà une adresse, l'unité fonctionnelle exploite l'information reçue à travers le réseau pour actualiser (39) sa mémoire d'adresse maximale (AMAX).

17. Procédé selon l'une des revendications 4 à 16, caractérisé en ce que les unités fonctionnelles ayant une mémoire d'adresse maximale attribuée vérifient que des adresses associées à des messages circulant dans l'espace de communication sont d'un ordre au plus égal au contenu de leur mémoire d'adresse maximale attribuée, et dans le cas contraire initient un processus de mise à jour de l'adresse maximale atrtibuée.

18. Procédé selon l'une des revendications 4 à 16, caractérisé en ce que des messages émis à travers l'espace de communication comportent une indication relative au contenu de la mémoire d'adresse maximale attribuée de l'unité fonctionnelle émettrice, et les unités fonctionnelles percevant ces messages vérifient la conformité du contenu de leur mémoire d'adresse maximale attribuée, et dans le cas contraire initient un processus de mise à jour de l'adresse maximale atribuée.

19. Procédé selon la revendication 18, caractérisé en ce que ladite indication a un encombrement réduit par rapport à l'adresse maximale attribuée.

20. Procédé selon l'une des revendications 1 à 19, caractérisé en ce' que l'unité cherchante, après avoir déterminé (59) ladite adresse d'ordre immédiatement supérieur, mais avant d'adopter définitivement cette adresse, effectue les étapes suivantes :
- envoi d'un message (69) de demande d'état à ladite adresse d'ordre immédiatement supérieur,
- en l'absence de réponse au message d'état, adoption (73) de l'adresse d'ordre immédiatement supérieur,
- en cas de réponse, incrémentation successive (74) de l'adresse (A) et envoi d'un message (69) de demande d'état à chaque adresse incrémentée jusqu'à adoption de la première adresse incrémentée pour laquelle le message de demande d'état reste sans réponse.

21. Procédé selon l'une des revendications 1 à 20, caractérisé en ce qu'on redistribue les adresses en émettant à travers le réseau un message de redistribution, à réception duquel les unités fonctionnelles se succédant dans un ordre déterminé effectuent les opérations suivantes :
- pour la première unité fonctionnelle, adoption (91, 96) de l'adresse de rang 1 et envoi sur le réseau d'un message (97) selon lequel l'adresse maximale attribuée est l'adresse de rang 1,
- pour chaque unité fonctionnelle suivante, adoption (96) de l'adresse du rang immédiatement supérieur à l'adresse maximale attribuée, et envoi sur le réseau d'un message (97) selon lequel l'adresse maximale attribuée est ladite adresse de rang immédiatement supérieur.

22. Procédé selon la revendication 21, caractérisé en ce qu'on associe à chaque adresse redistribuée une étape de substitution de l'adresse redistribuée à l'adresse antérieure dans au moins une donnée de mise en correspondance contenue dans une mémoire d'au moins une autre unité fonctionnelle.

23. Procédé selon l'une des revendications 1 à 22, caractérisé en ce que tout ou partie des messages envoyés à travers l'espace de communication (4) contiennent l'adresse d'unité de l'unité émettrice du message, et toute unité percevant un message dans lequel l'adresse d'unité de l'émetteur est égale à l'adresse d'unité locale de l'unité perceptrice envoie dans l'espace de communication un message de destruction d'adresses, destiné à toute unité ayant cette même adresse d'unité.

24. Unité fonctionnelle caractérisée en ce qu'elle comprend un micro-contrôleur (18) programmé selon le procédé de l'une des revendications 1 à 23, et auquel sont reliés des moyens d'entrée/sortie (19) et un moyen de communication bidirectionnelle (24) pour relier le micro-contrôleur à un espace de communication bidirectionnelle (4).

25. Installation comprenant des unités fonctionnelles (1, 2, 3) selon la revendication 24 reliées par un espace de communication bidirectionnelle (4).

26. Installation selon la revendication 25, caractérisée en ce qu'elle comprend en outre une unité (82) munie d'une commande (86) d'envoi d'un message de redistribution pour lancer un processus de redistribution des adresses selon la revendication 21 ou 22.

27. Installation selon la revendication 26, caractérisée en ce que la commande (86) est associée à un dispositif de déclaration d'isolement (84).
